Europäisches Patentamt

European Patent Office

Office européen des brevets

(11) Publication number : **0 518 629 A1**

# (12) EUROPEAN PATENT APPLICATION

(21) Application number : **92305306.0**

(51) Int. Cl.⁵ : **A01N 25/34, B65D 65/46**

(22) Date of filing : **10.06.92**

(30) Priority : **11.06.91 US 713681**
**11.06.91 US 713682**
**11.06.91 US 713683**
**11.06.91 US 713684**
**11.06.91 US 713685**
**11.06.91 US 713701**
**27.03.92 US 858661**

(43) Date of publication of application :
**16.12.92 Bulletin 92/51**

(84) Designated Contracting States :
**AT BE CH DE DK ES FR GB GR IT LI LU NL PT SE**

(71) Applicant : **RHONE-POULENC AGROCHIMIE**
**14-20, rue Pierre Baizet**
**F-69009 Lyon (FR)**

(72) Inventor : **Gouge, Samuel T.**
**1708 Parkridge Way**
**Raleigh, North Carolina 27614 (US)**
Inventor : **Aldred, Alan James**
**Sweet Briar Road**
**Norwich, Norfolk (GB)**
Inventor : **Dudley Rose, Richard John**
**Box 16 Site 30 RR4**
**Calgary, Alberta (CA)**
Inventor : **Chauncey, Raymond Marion**
**1374 Manucy Road**
**Amelia Island, Florida 32034 (US)**
Inventor : **Mc Evoy, Steven Foster**
**3921 San Bernado Drive**
**Jacksonville, Florida 32217 (US)**

(74) Representative : **Bentham, Stephen**
**J.A. Kemp & Co. 14 South Square Gray's Inn**
**London, WC1R 5LX (GB)**

(54) **New packaging/containerisation system for solids.**

(57)   A containerisation system which comprises a concentrated hazardous and solid composition in a cold water soluble or water dispersible bag wherein the bag has a residual inflatability. The hazardous composition comprises especially an agrochemical.

EP 0 518 629 A1

Jouve, 18, rue Saint-Denis, 75001 PARIS

The invention relates to new containerisation systems containing hazardous products in a solid composition which are safe for handling and for the environment. The invention relates also to methods of manufacturing the containerisation systems and to their use in protecting the agricultural environment and increasing the safety of people working with agrochemicals.

At present, most hazardous solids are stored in metal drums or, where smaller quantities are required, plastic containers.

Hazardous compounds, especially agrochemical compounds, are formulated in various compositions, solid or liquid. Liquid compositions are most convenient for farmers because of the relative ease with which they can be handled. There are, nevertheless, difficulties in handling such liquid compositions. There is a danger of spillage or leakage if there are holes in the containers previously used or if they are dropped. Although secure containers resistant to shock can be used, in the event of an accident, for example during transportation, the risk remains of spillage or leakage with rapid loss of liquid, for example leaking onto the ground.

It is also known to use water soluble bags in order to reduce the contact between people and hazardous products, but the bags may break so that some risk still exists.

It has been difficult to provide a formulation and a containing system which safeguards those handling it, including farmers and transporters, and the environment. This difficulty is particularly increased because the farmers are generally not very careful when handling materials.

The present invention seeks to provide a new containerisation system to contain hazardous products, especially agrochemicals, which is safe for handling, and for the environment.

The invention further seeks to provide a new containerisation system for agrochemicals which is as condensed as possible and uses the least amount of space possible.

The invention further seeks to provide a new containerisation system to contain hazardous compounds e.g. agrochemicals, which diminishes the risks of pollution.

As already said, it is known that agrochemicals may be contained in soluble bags or sachets made from films. Many kinds of active ingredients or pesticides may be used with water soluble bags. Due to the need of dispersibility in the tank of the farmer, the active ingredient should remain in a finely divided state. Powders may thus be used in water soluble bags, as well as liquid or gels or granules. However, water soluble bags may break when dropped, e.g. during transportation, handling, storage or the like. In particular, therefore, the invention seeks to provide containerisation systems comprising a cold water soluble bag and a hazardous compound such an agrochemical, which have good resistance to failure when dropped.

The invention further seeks to provide an effective packaging containing a hazardous compound, as active ingredient, in the form of a solid.

The invention further seeks to provide a shock absorbing containerisation system for containing agrochemicals, e.g. pesticides (such as insecticides, acaricides, fungicides, herbicides, nematicides) or plant protection agents or plant growth regulators.

The present invention yet further seeks to provide a containerisation system for containing agrochemicals which has very efficient shock absorbing properties, especially when dropped.

The present invention seeks to provide a new formulation system for agrochemicals which quickly dissolves or disperses when put into water, especially cold water in tanks of farmers, such as those commonly used for preparing spray mixtures.

The present invention provides a containerisation system which comprises a concentrated hazardous and solid composition in a cold water soluble or water dispersible bag wherein the bag has a residual inflatability.

The bag used is a cold water soluble or dispersible bag, which is soluble or dispersible, preferably soluble, in water at a temperature less than 35°C.

The present invention further provides a method of manufacturing such containerisation systems and their use in the storage or transport of agrochemicals.

The bag used in the invention is inflatable to a volume greater than the initial volume of the contents (hazardous composition and optionally air or gas space) of the bag, to provide the residual inflatability. Thus, the bag is filled to less than complete capacity, with the hazardous composition, and the unused capacity may partially, but not totally, be filled with air or any other gas preferably an inert gas. The unused capacity which does not contain gas provides the residual inflatability.

More precisely, the residual inflatability has the following meaning : assuming that the inside volume of a bag completely filled or completely inflated is 100 volume units, and that it contains y volume unit of hazardous composition and x volume units of gas space when closed, the residual inflatability (expressed in the form of a percentage) is $100 - x - y$. This is the definition and wording which is constantly used hereafter. Thus the actual volume of the closed bag is $x + y$ volume units, but could be 100 if completely inflated or filled.

According to the invention, the bag of the containerisation system has generally a residual inflatability of more than 5% (as previously defined, it is a percentage of the volume of the inflated bag), preferably more than 10%, still more preferably more than 15% and generally less than 70%. Preferably the residual, inflatability is less than 40%, more preferably less than 30% and most preferably less than 20% of the volume of the inflated bag.

In the containerisation system of the invention, an air or gas space may fill a part of the volume of the bag. However it is considered that the residual inflatability is most efficient in imparting resistance to shock and dropping of water soluble bags containing agrochemicals, if the volume of air or gas space is partially or totally reduced. Thus, air or gas space may be generally less than 20%, preferably less than 10%, of the volume of the bag in its filled but uninflated state. In one specific embodiment it is advantageous, to have no air or gas space in the bag (or an air or gas space less than 1%).

With or without an air or gas space within the bag, the bag may be inflated to a volume greater than the content of the bag (that is to say the actual volume of the composition contained in the closed bag plus the volume of the optional air space).

The compositions used in the invention are not diluted compositions for direct application on the soil or on the plant or on the area to be treated (whether it is a crop area or a non crop area), but they are in a concentrated form, that is to say in the form which is common for commercialization and they need to be diluted before use, especially before spraying. Thus the compositions used in the invention comprise generally more than 1 % and up to 95 % of hazardous product, preferably more than 20 % and up to 60 % (percentage are w/w unless contrary indicated) of hydrous product. They may be dust or powder or granules or other. The solid may be soluble, or partially soluble or insoluble in water. After dispersing in water such as spray tank, it has preferably a particle size of 0.1 to 50 micron (O if completely soluble).

Of course, the compositions used in the invention may contain all the known ingredients such as carriers(s), solvent(s), surfactant(s), dispersant(s), emulsifier(s), thickener(s) or thickening agent(s), or other additives, such as subilizer(s) , antifoaming agent(s), buffer(s).

Among the compositions of the invention as hereabove defined, some are preferred, especially those comprising one or more of the following constituents, (and/or having one or more of the following characteristics) :

the size of the suspended particles, if any, is less than 50 microns, preferably less than 20 microns,
they comprise 1 to 95 %, more preferably 15 to 80 %, of the active ingredient or hazardous product,
they comprise 5 to 95 %, more preferably 20 to 75 %, of a carrier,
they comprise 1 to 50 %, more preferably 2 to 15 %, of a surfactant,
they comprise 0 to 80 % of the solvent, more preferably 3 to 40 %,
they comprise 0 to 20 % of other additives (as herein before defined), preferably, 0.1 to 10 %,
they comprise less than 5 % by weight of water, preferably less than 2 %.

According to one feature, the compositions used in the invention preferably have a specific gravity in the range of 0.03 to 1.2, preferably in the range of 0.3 to 1 (by specific gravity, it is meant the specific gravity of the solid as a bulk).

According to a particular feature of the invention, the components of the compositions are chosen in such a way that the compositions of the invention have a spontaneity (as hereafter defined) less than 75, preferably less than 25.

The spontaneity is assessed according to the following method: A mixture of 1 g formulation with 99 ml water are put into a 150 ml glass tube which is stoppered and inverted through 180° (upside down). The number of rimes (that is to say of inversions) required to disperse 99 % of the formulation is called the spontaneity.

Carriers, or solid diluents, which may be used in the invention include aluminium silicate, silica gel, corn husks, tricalcium phosphate, powdered cork, absorbent carbon black, magnesium silicate, a clay such as kaolin, bentonite or attapulgite, and water soluble polymers and such solid compositions may, if desired, contain one or more compatible wetting, dispersing, emulsifying or colouring agents which, when solid, may also serve as diluent.

The solid compositions of the invention, which may take the form of dusts, granules or wettable powders, are generally prepared by impregnating the solid diluents with liquid ingredients or additives or solutions thereof in volatile solvents; thereafter the solvents may be evaporated and, if necessary, ground so as to obtain powders; if furthermore desired, the products are granulated or compacted so as to obtain granules or pellets or encapsulated as finely divided active ingredient in natural or synthetic polymers, eg. gelatin, synthetic resins and polyamides.

The surfactants, that is to say wetting, dispersing and emulsifying agents, which may be present, particularly in wettable powders, may be of the ionic or non-ionic types, for example sulphoricinoleates, quaternary ammmonium derivatives or products based upon condensates of ethylene oxide with nonyl- and octyl-phenol, or carboxylic acid esters of anhydrosorbitols which have been rendered soluble by etherification of the free hydroxy groups by condensation with ethylene oxide, or mixtures of these types of agents.

By the word surfactant, it is meant an organic material which is able to substantially reduce the surface tension of water which is 73 dynes/cm at 20°C

By the expression "hazardous product" as used herein is meant a product which may cause damage to the environment or be injurious to a person handling it. Hazardous compounds which are used in agriculture are mainly contemplated in the invention to be contained in water soluble bags with residual inflatability. Such hazardous compounds are ingredients active in agriculture, such as agrochemicals, and more precisely pesticides (such as herbicides, fungicides, insecticides, acaricides, nematicides) or plant protection agents (including plant growth regulators or plant nutrient) or adjuvants for The activity for plants as activity promoters including penetrating agents, synergists, antidotes, sticking agents, spreaders, activators, and compatibility agents. Pesticides are however preferred.

The invention is not limited to some specific agrochemicals; a list of many agrochemicals which can be used in the invention includes :

Fungicides such as Triadimefon, Tebuconazole, Prochloraz, Triforine, Tridemorph, Propiconazole, Pirimicarb, Iprodione, Metalaxyl, Bitertanol, Iprobenfos, Musilazol, Fosetyl, Propyzamide, Chlorothalonil, Dichlone, Mancozeb, Anthraquinone, Maneb, Vinclozolin, Fenarimol, Bendiocarb, Captafol, Benalaxyl, Thiram, Chlorothalonil, Captan, Zineb, Tridimefon, Metalaxyl, Iprodione, Fenarimol, Sulfur, Quintozene, copper salts, Vinclozolin, Thiophanate-methyl, Tricyclazole, Dicloran, Benomyl,

Herbicides (or defoliants) such as quizalofop and its derivatives, Acetochlor, Metolachlor, Imazapur and Imazapyr, Glyphosate and Gluphosinate, Butachlor, Acifluorfen, Oxyfluorfen, Butralin, Muazifop-butyl, Bifenox, Bromoxynil, Ioxynil, Diflufenican, Phenmedipham, Desmedipham, Oxadiazon, Mecopropo, MCPA, MCPB, MCPP, Linuron, Isoproturon, Mamprop and its Derivatives, Ethofumesate, Diallate, Carbetamide, Alachlor, Metsulfuron, Chlorsulfuron, Chlorpyralid, 2,4-d, Tribufos, Triclopyr, Diclofop-methyl, Sethoxydim, Pendimethalin, Trifluralin, Ametryn, Chloramben, Amitrole, Asulam, Bentazone, Atrazine, Cyanazine, Thiobencarb, Prometryn, 2-(2-chlorobenzyl)-4,4-dimethyl-1,2-oxazolin-3-one, Fluometuron, Napropamide, Paraquat, Bentazole, Molinate, Propachlor, Imazaquin, Metribuzin, Tebuthiuron, Oryzalin, Dicamba, Bromoxynil ester, Pursuit, Norflurazon, Simazine, Acifluorfen sodium, Trichlopyr, sulfonylureas and Trialkoxydim,

Insecticides or nematicides such as Ebufos, Carbosulfan, Amitraz, Vamidothion, Ethion, Triazophos, Propoxur, Permethrin, Cypermthrin, Parathion, Methylparathion, Diazinon, Methomyl, Lindane, Fenvalerate, Ethoprophos, Endrin, Endosulfan, Dimethoate, Dieldrin, Dicrotophos, Dichlorprop, Dichlorvos, Azinphos and its derivarives, Aldrin, Cyfluthrin, Deltamethrin, Disulfoton, Chlordimeform, Chlorpyrifos, Carbaryl, Dicofol, Thiodicarb, Propargite, Demeton, Phosalone, Acephate, Azinophosmethyl, Carbaryl, Carbofuran, Methamidofos, Fenbutalin oxide, Trichlorfon, Abamectin, Aldicarb, Malathion, and pyrethroids, Bacillis Thuringensis,

Plant growth regulators such as gibberellic acid, Ethrel or Ethephon, Cycocel, Chlormequat, Ethephon, Dimethipin, Mepiquat,

and other biological biocides and mixtures thereof.

The preparation or manufacturing of the compositions of the invention can be made by any known method. A convenient way is to mix together the different constituents of the mixture/composition and to stir them, optionally with grinding or milling and/or heating. Grinding and/or milling are generally necessary in order to obtain the active ingredient in the form of particles having the size as hereinbefore defined. Sometimes it is easier to operate with a slow addition of the constituents of the composition and it might be also useful that the thickening agent is added last. As already said, liquid ingredients are generally absorbed or adsorbed or impregnated on other solid constituents.

The chemical nature of the enveloping film constituting the bags which may contain the composition used in the invention can vary quite widely. Suitable materials are water soluble or water dispersible, preferably water soluble, materials which are insoluble in the organic solvents used to dissolve or disperse the active ingredient. Specific suitable materials include polyethylene oxide, such as polyethylene glycol; starch and modified starch; alkyl and hydroxyalkylcellulose, such as hydroxymethylcellulose, hydroxyethylcellulose, hydroxypropylcellulose; carboxymethylcellulose; polyvinylethers such as poly methyl vinylether; poly(2,4-dimethyl-6-triazolylethylene); poly(vinylsulfonic acid); polyanhydrides; low molecular weight urea-formaldehyde resins; low molecular weight melamine-formaldehyde resins; poly(2-hydroxyethyl methacrylate); polyacrylic acid and its homologs; but preferably the enveloping film comprises or is made from polyvinylalcohol (PVA). It might be that some active ingredients, may react with some polymers constituting the wall of the bags; in such a situation, the material constituting the wall of the bag is changed into a material which is inert to the active ingredient.

Preferred material for constituting the bags used in the invention include polyethylene oxide or methylcellulose, or polyvinylalcohol. When polyvinylalcohol is used, it is advantageously a 40-100%, preferably 80-99% alcoholized or hydrolysed, polyvinyl acetate film.

The films which are used to make the bags may be any water soluble or water dispersible film known per se. In order to make a bag, the film needs to be shaped (possibly partially sealed) and then filled with the composition comprising the hazardous compound. When filled (as hereinbefore defined), the bag is closed generally

EP 0 518 629 A1

by sealing, for example heat sealing.

According to the invention, the bags are not completely filled with the hazardous compositions. They are only partially filled and then sealed. When they are sealed, they may be sealed close to the hazardous composition so as to include either no air space or only very little air space. They may also be closed so as to maintain some air space between the composition and the wall of the bag. Nevertheless, in all cases the bag when filled, is not expanded so as to be completely inflated. On the contrary, the walls of the bag are maintained in such a position that further substance could be put in the bag if this were desired, and the bag is closed (generally by sealing) before it is completely inflated.

A particular feature of the instant invention is vacuum-packaged containerisation systems. In such packages, the bag has residual inflatability, but no air space, except the air space between solid grains. To obtain such vacuum packaged bags, the air or atmosphere is withdrawn from the bag before it is sealed. Due to the fact that the content of the bag is solid, the final bags, after sealing, have a certain rigidity which further contributes to the strength and shock resistance of the package of the invention. Thus, these vacuum packaged bags are preferred.

The invention relates also to a method of manufacturing the containerisation systems of the present invention which method comprises manufacturing a water soluble or water dispersible bag by partially filling the bag with a concentrated hazardous composition, and closing the filled bag to provide residual inflatability therein.

The invention relates also to the use of the containerisation system of the present invention in the storage or transport of agrochemicals. Such use may provide effective protection of the agricultural environment.

The containerisation systems of the invention may be used to provide spray mixtures, suitable for use in agriculture, by dissolving or dispersing them in water, for example in a spray tank.

The following examples are given for illustrative purposes and should not be understood as restricting the invention.

EXAMPLE 1

The components are listed below and the per cent given:

COMPONENT

| | |
|---|---|
| Carbaryl (active ingredient) | 75% |
| Naphtalene sulfonate (dispersant) | 4.0% |
| Sodium benzoate + sulfosuccinate blend (wetting agent) | 0.5% |
| Clay (carrier) | 20.5% |

The concentrated solid composition was prepared by mixing the carrier and the surfactants and active ingredient(s), then by shearing and air milling until the proper particle size was achieved.

This formulation was then packaged in water soluble polyvinyl alcohol bag. The bag was made from a folded polyvinyl alcohol film. The polyvinyl alcohol was cold water soluble and had a hydrolysis rate of acetate groups of 88 %. The film was folded so as to form a vertical tube and heat sealed according to an horizontal line at the bottom; a second seal was made according to a vertical line crossing the first seal at the lowest part of the seal; after filling, the closing of the bag was made through a third seal which was made according to a horizontal line crossing the vertical seal at its upper part.

The bag could have been filled up to a volume of 1000 ml if completely filled. Only 800 ml of pesticidal composition were put into the bag, leaving very little air space (less than 1 %). Thus the residual inflatability was of about 20 %

100 identical bags were dropped 2 times from 1.2 m upon the ground. No breaking or leakage is observed.

EXAMPLES 2 to 4

Similar bags with similar residual inflatability are prepared with followng specificities:

Example 2:

Methomyl     90.0 %
Silica        10.0 %
The mixture is ground in hammermill to fine powder. 500 g of product are packed into the water soluble

package.

Example 3:

| | |
|---|---|
| Carbaryl | 50.3 % |
| Clay | 47.7 % |
| Sodium Alkyl Naphthalene Sulfonate | 1.0 % |
| Lignosulfonate | 1.0 % |

The mixture is milled in high pressure air mill to an average particle size of 4 microns. 454 g are packaged into water soluble bag. The residual inflatability is 23 % . There is no air space other than the air between the solid particles. 5 bags are made in the same way and dropped 100 times from 80 cm upon the ground. None of the bags failed.

Example 4

| | |
|---|---|
| Thiodicarb | 50.0 % |
| Clay | 44.0 % |
| Lignosulfonate | 5.0 % |
| Block Copolymer ethylene oxide / propylene oxide | 1.0 % |

The mixture is milled in high pressure air mill to an average particle size of 4 microns. 400 g are packaged into water soluble bag.

**Claims**

1. A containerisation system which comprises a concentrated hazardous and solid composition in a cold water soluble or water dispersible bag wherein the bag has a residual inflatability.

2. A containerisation system according to claim 1 wherein the hazardous composition comprises a compound active in agriculture.

3. A containerisation system according to claim 2 wherein the hazardous composition comprises an agrochemical.

4. A containerisation system accoding to claim 3 wherein the hazardous composition comprises a pesticide.

5. A containerisation system according to claim 3 or 4 wherein the hazardous composition comprises a compound which is a herbicide, a fungicide, an insecticide, an acaricide, a nematicide, a plant protection agent, a plant growth regulator, a plant nutrient, an adjuvant for the activity for plants, an activity promoter, a penetrating agent, a synergist, an antidote, a sticking agent, a spreader, an activator or a compatibility agent.

6. A containerisation system according to any one of the preceding claims wherein the bag has a residual inflatability greater than 5% of the volume of the inflated bag.

7. A containerisation system according to claim 6 wherein the bag has a residual inflatability greater than 10% of the volume of the inflated bag.

8. A containerisation system according to claim 7 wherein the bag has a residual inflatability greater than 15% of the volume of the inflated bag.

9. A containerisation system according to any one of the preceding claims wherein the bag has a residual inflatability less than 70% of the volume of the inflated bag.

10. A containerisation system according to claim 9 wherein the bag has a residual inflatability less than 40% of the volume of the inflated bag.

11. A containerisation system according to any one of the preceding claims wherein the bag has an air or gas space of less than 20% of the volume of the bag.

12. A containerisation system according to claim 11 wherein the bag has a residual inflatability greater than 10% of the volume of the inflated bag, and an air or gas space of less than 20% of the volume of the bag.

13. A containerisation system according to claim 11 or 12 wherein the bag has an air or gas space of less than 10% of the volume of the bag.

14. A containerisation system according to claim 13 wherein the bag has no air or gas space or an air or gas space less than 1% of the volume of the bag.

15. A containerisation system according to any one of the preceding claims wherein the composition comprises from 1% to 95% by weight of hazardous product.

16. A containerisation system according to claim 15 wherein the composition comprises from 15% to 80% by weight of hazardous product.

17. A containerisation system according to claim 16 wherein the composition comprises from 20% to 60% by weight of hazardous product.

18. A containerisation system according to any one of the preceding claims wherein the composition comprises suspended particles, whose size is less than 50 microns.

19. A containerisation system according to claim 18 wherein the composition comprises suspended particles, whose size is less than 20 microns.

20. A containerisation system according to any one of claims 15 to 19 wherein the composition comprises from 1% to 95% by weight of hazardous product, 5 to 95% by weight of a carrier, 1 to 50% of surfactant, 0 to 80% by weight of solvent, 0 to 20% by weight of other additives and less than 5% by weight of water.

21. A containerisation system according to claim 20 wherein the composition comprises from 1% to 95% by weight of hazardous product, 2 to 15% by weight of surfactant, 3 to 40% by weight of solvent, 0.1 to 10% by weight of other additives and less than 2% by weight of water.

22. A containerisation system according to any one of the preceding claims wherein the composition has a bulk specific gravity from 0.03 to 1.2.

23. A containerisation system according to any one of the preceding claims wherein the composition has a spontaneity less than 75.

24. A containerisation system according to any one of the preceding claims wherein the water soluble or water dispersible bag comprises an enveloping film comprising polyethylene oxide, polyethylene glycol; starch or modified starch; alkyl or hydroxyalkylcellulose; carboxymethylcellulose; a polyvinylether; poly(2,4-dimethyl-6-triazolylethylene); poly(vinylsulfonic acid); a polyanhydride; a low molecular weight urea-formaldehyde resin; a low molecular weight melamine-formaldehyde resin; poly(2-hydroxyethyl methacrylate); polyacrylic acid or a homolog thereof; or polyvinylalcohol.

25. A containerisation system according to any one of the preceding claims which is vacuum packaged.

26. A method of manufacturing a containerisation system as claimed in any one of the preceding claims which method comprises manufacturing a water soluble or water dispersible bag by partially filling the bag with a concentrated hazardous composition, and closing the filled bag to provide residual inflatability therein.

27. Use of a containerisation system as claimed in any one of claims 1 to 26 in the storage or transport of agrochemicals.

**European Patent Office**

## EUROPEAN SEARCH REPORT

Application Number

EP 92 30 5306

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 347 222 (MAY & BAKER) <br> * claims * <br> * column 1, line 65 - column 2, line 6 * <br> * column 2, line 47 - line 57 * <br> * column 4, line 10 - line 14 * <br> --- | 1-27 | A01N25/34 <br> B65D65/46 |
| A | GB-A-922 317 (ASSOCIATED FUMIGATORS) <br><br> ----- | | |

| | TECHNICAL FIELDS SEARCHED (Int. Cl.5) |
|---|---|
| | A01N <br> B65D |

The present search report has been drawn up for all claims

| Place of search | Date of completion of the search | Examiner |
|---|---|---|
| THE HAGUE | 07 OCTOBER 1992 | DECORTE D.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)